# EUROPEAN PATENT APPLICATION

(11) **EP 3 270 030 A1**
(43) Date of publication of application: **17.01.2018**
(21) Application number: 16761747.1
(22) Date of filing: 08.03.2016
(51) Int. Cl.: F16L 59/065, B32B 5/26, F25D 23/06

(54) **VACUUM INSULATED PANEL, CORE MATERIAL, REFRIGERATOR, METHOD FOR PRODUCING VACUUM INSULATED PANEL, AND METHOD FOR RECYCLING REFRIGERATOR**

(30) Priority: 10.03.2015 JP 2015047266; 13.03.2015 JP 2015050734; 16.03.2015 JP 2015052093; 17.03.2015 JP 2015053458; 17.03.2015 JP 2015053459; 17.03.2015 JP 2015053460; 17.03.2015 JP 2015053454; 17.03.2015 JP 2015053455; 17.03.2015 JP 2015053456; 17.03.2015 JP 2015053457; 17.03.2015 JP 2015053450; 17.03.2015 JP 2015053451
(71) Applicant: Kabushiki Kaisha Toshiba, Minato-ku Tokyo 105-8001 (JP); Toshiba Lifestyle Products & Services Corporation, Kawasaki-shi, Kanagawa 210-8543 (JP)
(72) Inventor: KOJIMA, Kenji, Kawasaki-shi, Kanagawa 210-8543 (JP); SHINAGAWA, Eiji, Kawasaki-shi, Kanagawa 210-8543 (JP); UEMATSU, Ikuo, Tokyo 105-8001 (JP); HAYAMIZU, Naoya, Tokyo 105-8001 (JP); OOSHIRO, Kenichi, Tokyo 105-8001 (JP)
(74) Representative: Henkel, Breuer & Partner
(86) International application number: PCT/JP2016/057130
(87) International publication number: WO 2016/143779

(57) **Abstract**

In a vacuum insulated panel according to an embodiment of the present invention, a core material comprising resin fibers is accommodated within an outer cover material. The resin fibers are formed directly on the inner surface of the outer cover material.

## Description

### Technical Field

Embodiments of the present invention relate to a vacuum heat insulation panel, a core material constituting a vacuum heat insulation panel, a refrigerator provided with a vacuum heat insulation panel, a manufacturing method of a vacuum heat insulation panel, and a recycling method of a refrigerator.

### Background Art

In the past, there has been considered a heat insulation material configured to contain a core material having a heat insulation function in an outer packaging (e.g., see Patent Literature 1). In a technical field of this kind of heat insulation materials, it has been considered in recent years that a non-woven fabric is formed of fiber materials and numerous non-woven fabrics are laminated to constitute the core material. However, the work of laminating the numerous non-woven fabrics is burdensome, and a work of putting the core material having such numerous non-woven fabrics laminated into the outer packaging, that is, a so-called bagging operation is also burdensome.

For a vacuum heat insulation panel that is an example of this kind of heat insulation material, it has been considered that the core material constituting a main body part thereof is formed of resin fibers. On the other hand, in a case where this kind of vacuum heat insulation panel is provided to a refrigerator, for example, a groove for containing a heat radiating pipe is required to be provided on a surface of the core material. That is, a technology is required for forming a desired concavo-convex shape on the surface of the core material.

The vacuum heat insulation panel used for the refrigerator has been required to have higher heat insulation property and further reduce its thickness and weight. The core material of the vacuum heat insulation panel of related art is formed mainly of glass fibers. However, the glass fiber used for these core materials has a large specific gravity, which causes a problem of difficulty in reduction of the thickness and weight of the vacuum heat insulation panel.

The glass fiber has a fiber length as short as less than 1 mm or less, and has a floc-like appearance. Therefore, it is difficult to separate the outer packaging from the glass fibers as the core material which constitute the vacuum heat insulation panel in discarding. As a result, a problem is caused that the vacuum heat insulation panel having become unnecessary has to be discarded without separating the core material and the glass fiber.

The vacuum heat insulation panel used for various equipment and facilities is required to have higher heat insulation property and further reduce in its thickness and weight. The core material of the vacuum heat insulation panel of related art is formed mainly of glass fibers. However, the glass fiber used for these core materials has a large specific gravity, which causes a problem of difficulty in reduction of the thickness and weight of the vacuum heat insulation panel.

### Citation List

### Patent Literature

Patent Literature 1: Japanese Patent Laid-Open No. 2006-105286
Patent Literature 2: Japanese Patent No. 4511565
Patent Literature 3: Japanese Patent No. 4713566

### Summary of Invention

### Technical Problem

The embodiments provide a vacuum heat insulation panel capable of being manufactured more easily, a core material constituting this vacuum heat insulation panel, a refrigerator provided with this vacuum heat insulation panel, and a manufacturing method of this vacuum heat insulation panel.

Moreover, the embodiments provide a manufacturing method of a vacuum heat insulation panel capable of forming a desired concavo-convex shape on a surface of a core material even in a case where the core material is formed of resin fibers, a vacuum heat insulation panel manufactured by this manufacturing method, a core material constituting this vacuum heat insulation panel, and a refrigerator provided with this vacuum heat insulation panel.

Further, the embodiments provide a vacuum heat insulation panel for a refrigerator which maintains heat insulation performance and reduces in its thickness and weight as well as is easy to recycle to attain environmental load reduction, and a recycling method of a refrigerator.

Furthermore, the embodiments provide a core material of a vacuum heat insulation panel which maintains heat insulation performance and further reduce its thickness and weight, a vacuum heat insulation panel, and a refrigerator.

### Solution to Problem

A vacuum heat insulation panel according to an embodiment is a vacuum heat insulation panel containing a core material formed of resin fibers in an outer packaging, in which the resin fibers are formed into a film directly on an inner surface of the outer packaging.

A manufacturing method of a vacuum heat insulation panel according to the embodiment is a manufacturing method of a vacuum heat insulation panel containing a core material formed of resin fibers in an outer packaging, the method including a step of forming a resin fiber layer formed of the resin fibers into a film on a sheet material forming the outer packaging, and a step of forming the outer packaging from the sheet material on which the resin fiber layer is formed into a film.

A manufacturing method of a vacuum heat insulation panel according to the embodiment is a manufacturing method of a vacuum heat insulation panel including a core material formed of resin fibers, the method including a core material forming step of ejecting a resin solution dissolving resin as a raw material for the resin fiber from a nozzle to form the core material. In the core material forming step, an ejection mode of the resin solution is adjusted to form a convex portion and a concave portion on a surface of the core material.

A vacuum heat insulation panel according to the embodiment is used for a refrigerator including a heat insulation box having an inner box and an outer box and component members provided inside the heat insulation box, the vacuum heat insulation panel being interposed between the inner box and the outer box and performing heat insulation between the inner box and the outer box. The vacuum heat insulation panel includes a core material and an outer packaging. The core material has a plurality of laminated layers of non-woven fabric formed of resin fibers each of which is made of the same synthetic resin as the component members, and has an outer diameter d of the fiber falling within a range of d < 1 µm and a fiber length of 1000 or more times the outer diameter d. The outer packaging is formed into a bag-like shape containing the core material with an inside thereof being depressurized.

The core material of the vacuum heat insulation panel according to the embodiment has a plurality of laminated layers of the non-woven fabric. The non-woven fabric is formed of resin fibers each having an outer diameter d falling within a range of d < 1 µm.

### Brief Description of Drawings

[Figure 1] Figure 1 is a schematic sectional view showing a vacuum heat insulation panel according to a first embodiment.
[Figure 2] Figure 2 is a schematic sectional view showing a sheet material constituting an outer packaging.
[Figure 3] Figure 3 is a diagram showing an example of a manufacturing method of a vacuum heat insulation panel (no. 1).
[Figure 4] Figure 4 is a diagram showing an example of a manufacturing method of a vacuum heat insulation panel (no. 2) .
[Figure 5] Figure 5 is a schematic perspective view showing a heat insulation box of a refrigerator.
[Figure 6] Figure 6 is a schematic perspective view showing a vacuum heat insulation panel assembly for a refrigerator.
[Figure 7] Figure 7 is a schematic sectional view showing a modification example of the vacuum heat insulation panel.
[Figure 8] Figure 8 is a schematic sectional view showing a vacuum heat insulation panel according to a second embodiment.
[Figure 9] Figure 9 is a diagram showing an example of a manufacturing method of a vacuum heat insulation panel.
[Figure 10] Figure 10 is a diagram showing an exemplary configuration of a concavo-convex shape of a vacuum heat insulation panel (no. 1).
[Figure 11] Figure 11 is a diagram showing an exemplary configuration of a concavo-convex shape of a vacuum heat insulation panel (no. 2).
[Figure 12] Figure 12 is a sectional view showing an exemplary configuration of a wall part of a refrigerator where a vacuum heat insulation panel is incorporated (no. 1).
[Figure 13] Figure 13 is a sectional view showing an exemplary configuration of a wall part of a refrigerator where a vacuum heat insulation panel is incorporated (no. 2).
[Figure 14] Figure 14 is a schematic sectional view showing a vacuum heat insulation panel according to a third embodiment.
[Figure 15] Figure 15 is a schematic sectional view showing a refrigerator.
[Figure 16] Figure 16 is schematic perspective view showing a refrigerator.
[Figure 17] Figure 17 is a schematic perspective view showing a vacuum heat insulation panel assembly for a refrigerator.
[Figure 18] Figure 18 is a schematic view showing a core material and non-woven fabric of a vacuum heat insulation panel.
[Figure 19] Figure 19 is a schematic view showing a manufacturing apparatus of a vacuum heat insulation panel.
[Figure 20] Figure 20 is a schematic sectional view showing a vacuum heat insulation panel according to a fourth embodiment.
[Figure 21A] Figure 21A is an exploded perspective view schematically showing a core material of a vacuum heat insulation panel.
[Figure 21B] Figure 21B is a schematic view showing a core material of a vacuum heat insulation panel viewed from the side.
[Figure 22] Figure 22 is a schematic view showing a core material of a vacuum heat insulation panel viewed from the side.
[Figure 23] Figure 23 is a table generally showing physical property values of solvents.
[Figure 24] Figure 24 is a table comparing physical properties between Examples and Comparative Examples.

### Description of Embodiments

Hereinafter, plural embodiments are described based on the figures. Note that elements virtually the same are designated by the same reference sign in the embodiments, and the description thereof is omitted.

### (First Embodiment)

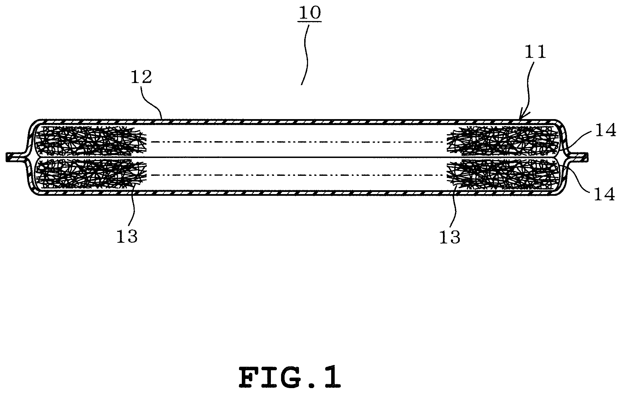

A vacuum heat insulation panel 10 illustrated in Figure 1 includes a core material 11 constituting a main portion thereof within an outer packaging 12. The core material 11 is constituted by a resin fiber 13. The outer packaging 12 constitutes a surface part of the vacuum heat insulation panel 10. The outer packaging 12 having the core material 11 thereinside is sealed after its inside is depressurized until the inside pressure becomes almost vacuum. This forms the outer packaging 12 having the core material 11 thereinside as the vacuum heat insulation panel 10 an inside of which is vacuumized.

The core material 11 is in a state where a plurality of resin fiber layers 14, two layers in this case, are laminated on an inner surface of the outer packaging 12, the resin fiber layer being formed into a non-woven fabric-like film. The resin fiber layer 14 is formed into a film directly on the inner surface of the outer packaging 12. This resin fiber layer 14 is formed of resin fibers 13 tangling each other at random. The resin fiber 13 is made by an electrospinning method. The resin fiber 13 made by the electrospinning method is a fine fiber whose average fiber diameter is about 1 µm and is a long fiber whose length is more than 1000 times its outer diameter. The resin fiber 13 has a shape generally not linear but curbed at random in a crimped fashion. For this reason, the resin fibers 13 are likely to tangle each other to be easily formed into the non-woven fabric-like resin fiber layer 14. By utilizing the electrospinning method, spinning of the resin fiber 13 and forming the resin fiber layer 14 can be carried out at the same time. As a result, the core material 11 can be formed in shorter man-hours.

The resin fiber 13 forming the resin fiber layer 14 is ensured to have an ultrafine average fiber diameter from nanometers to micrometers by utilizing the electrospinning method. Therefore, a thickness per one sheet of the resin fiber layer 14 is very thin, and a thickness of the core material 11 is also thin. In a case of the glass fiber of related art, the fiber length is shorter and the fibers are less likely to tangle each other. For this reason, if the glass fiber is used, the non-woven fabric-like fiber layer is difficult to maintain. In the case of the glass fiber also, spinning of the glass fiber and forming of the non-woven fabric-like fiber layer are generally difficult to carry out at the same time.

In this way, in the case of the embodiment, the core material 11 has a configuration in which two resin fiber layers 14 are laminated. The resin fiber 13 forming the resin fiber layer 14 is formed to have a substantially uniform circular or ellipsoidal section. The resin fiber 13 forming the resin fiber layer 14 is made from an organic polymer having a density smaller than glass. Making the resin fiber 13 of the polymer having the density smaller than glass can attain weight reduction of the resin fiber 13. The resin fiber layer 14 may be formed by mixing two or more kinds of the resin fibers 13.

Examples of the resin fiber layer 14 formed by fiber-mixing include polystyrene fibers, aromatic polyamide-series resin (registered trademark: Kevlar), and the like. The resin fiber layer 14 can be formed by mixing, besides the above, one polymer or two or more polymers selected from polycarbonate, polymethylmethacrylate, polypropylene, polyethylene, polyethylene terephthalate, polybutylene terephthalate, polyamide, polyoxymethylene, polyamide-imide, polyimide, polysulfone, polyethersulfone, polyetherimide, polyetheretherketone, polyphenylene sulfide, modified polyphenylene ether, syndiotactic polystyrene, liquid crystal polymer, urea resin, unsaturated polyester, polyphenol, melamine resin, and epoxy resin, and copolymer containing these.

In the case where the resin fiber 13 is made by the electrospinning method, the above polymer is liquefied. As a solvent, volatile organic solvents such as isopropanol, ethylene glycol, cyclohexanone, dimethylformamide, acetone, ethyl acetate, dimethylacetamide, N-methyl-2-pyrrolidone, hexane, toluene, xylene, methyl ethyl ketone, diethyl ketone, butyl acetate, tetrahydrofuran, dioxane, and pyridine, or water can be used, for example. The solvent may be one selected from the above solvents, or a plurality of kinds of the solvents may be mixed to be used. Note that the solvent applicable to the embodiments is not limited the above solvents. The above solvents are merely examples.

In this case, any of the mixed resin fibers 13 is so set that an outer diameter d falls within a range of d < 1 µm. A plurality of kinds of the resin fibers 13 are mixed in this way, which can attain improvement in the heat insulation property, weight reduction, and strength of the resin fiber layer 14. In the resin fiber layer 14, when a volume of airspaces formed among the resin fibers 13 tangling each other decreases, the number of the airspaces contrarily increases. The more the number of the airspaces formed among the resin fibers 13, the more improvement in the heat insulation property is attained. Therefore, in the resin fiber layer 14, the outer diameter d of each fiber of the resin fibers 13 forming the resin fiber layer 14 is preferably reduced to the order of nanometers in a range of d < 1 µm. The diameter reduction of the outer diameter d of the resin fiber 13 in this way decreases the volume of and increases the number of the airspaces formed among the resin fibers 13. Such diameter reduction more decreases the volume of and more increases the number of the airspaces formed among the resin fibers 13 tangling each other, which attains improvement in the heat insulation property of the resin fiber layer 14.

To the resin fiber 13, various inorganic fillers may be added such as silicon oxide, metal hydroxide, carbonate, hydrosulfate, and silicate, for example. Adding the inorganic filler to the resin fiber 13 in this way allows the heat insulation property of the resin fiber layer 14 to be maintained and can attain improvement in the strength thereof. Concretely, as the added inorganic filler, wollastonite, potassium titanate, xonotlite, gypsum fibers, aluminum port rate, MOS (basic magnesium sulfate), aramid fibers, carbon fibers, glass fibers, talc, mica, and glass flakes may be also used.

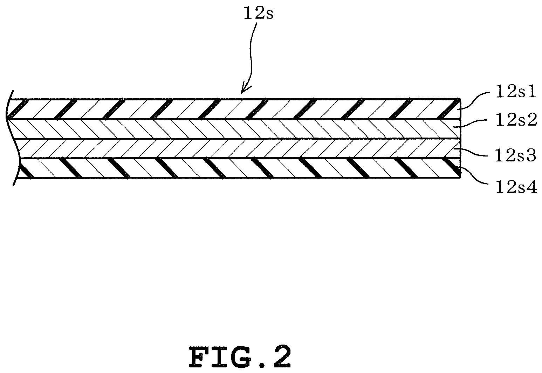

The outer packaging 12 is formed of an airtight sheet material which has no gas permeability because of made by depositing metal or metal oxide on one layer or two or more layers of resin film, for example. As shown in Figure 2, a sheet material 12s constituting the outer packaging 12 has a configuration in which a plurality of layers are laminated. In this case, the sheet material 12s has at least four layers 12s1 to 12s4. The layer 12s1 constitutes the inner surface of the outer packaging 12 in a state where the relevant outer packaging 12 is formed of the sheet material 12s. This layer 12s1 is made from polyethylene, for example, and has heat sealing property. Note that the material from which this layer 12s1 is made is not limited to polyethylene, and may be made from polypropylene, for example. The layer 12s2 is made from ethylene-vinyl acetate (EVA) copolymer, for example, to make the sheet material 12s have flexibility. The layer 12s3 is a metal layer made of aluminum foil or aluminum deposited layer, for example, and has a function to block flow of air. The layer 12s4 constitutes an outer surface of the outer packaging 12 in a state where the relevant outer packaging 12 is formed of the sheet material 12s. This layer 12s4 is made from polyethylene terephthalate, polyamide or the like, for example, and has a function to improve stiffness and strength of the sheet material 12s.

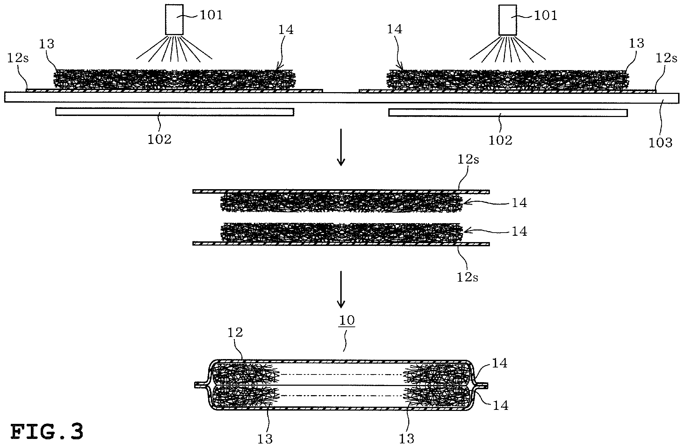

Next, a description is given of a manufacturing method of the above vacuum heat insulation panel 10. As shown in Figure 3, a manufacturing apparatus of the vacuum heat insulation panel 10 includes a nozzle 101 and a return electrode 102. The nozzle 101 and the return electrode 102 are opposite to each other. A high voltage of several kV or more is applied between the nozzle 101 and the return electrode 102, for example. In other words, an electric field is formed between the nozzle 101 and the return electrode 102 by the applied voltage. The manufacturing apparatus includes a pedestal unit 103 between the nozzle 101 and the return electrode 102. On the pedestal unit 103, the sheet material 12s is placed. The pedestal unit 103 may be configured by a conveyance belt.

A resin as the material of the resin fiber 13 is dissolved in a solvent compatible to the resin such as toluene to be supplied to the nozzle 101. The solution of the resin supplied to the nozzle 101 is sprayed at a high pressure from the nozzle 101 toward the sheet material 12s. At this time, as described above, the electric field is formed between the nozzle 101 and the return electrode 102 by the high voltage. The resin solution sprayed from the nozzle 101 is made to be fine by applying the high voltage, and is attracted from the nozzle 101 toward the return electrode 102 at random while fluctuating by means of an electrostatic action because of being electrically charged. The solvent in the resin solution sprayed at the high voltage vaporizes once the solution is sprayed from the nozzle 101. Therefore, the resin solution becomes fine fiber-like and adheres to the sheet material 12s in a random shape. As a result, on a surface of the sheet material 12s on the nozzle 101 side, the resin fiber layer 14 is formed in which fine fibers tangling each other.

The resin fibers 13 are splayed from the nozzle 101 at random and in disorder, that is, sprayed in an irregular state. Therefore, once the resin fiber 13 is sprayed from the nozzle 101, it irregularly rolls to be formed to have a shape generally not straight but in a randomly crimped fashion. As a result, the resin fibers 13 tangle each other irregularly and strongly to form the resin fiber layer 14. The resin fiber 13 may have a spiral form appearance when sprayed from nozzle 101 in some cases. The resin fiber 13 having the spiral form appearance strongly tangles with other resin fibers 13 to contribute to the improvement in the strength of the resin fiber layer 14. Further, the resin fibers 13 are continuously sprayed from the nozzle 101. For this reason, the formed resin fibers 13 are formed into substantially continuous one fiber until completion of spraying from the nozzle 101. As a result, the resin fiber 13 becomes a very large long fiber having a fiber length of 1000 or more times an outer diameter of the fiber.

If the resin fiber 13 is made by the electrospinning method, the fiber has a sufficient continuous length without being broken. Therefore, the resin fiber 13 made by the electrospinning method tangles not only with other fibers but also with itself because of its length and an irregular shape due to rolling when formed. As a result, the resin fiber 13 made by the electrospinning method forms the resin fiber layer 14 also by one fiber strongly tangling with itself. This allows the resin fiber layer 14 having a more stable shape to be formed.

Note that in forming the resin fiber layer 14, before the resin fiber layer 14 is formed into a film, ends of the sheet material 12s may be masked by a masking tape not shown for example. This can prevent the resin fiber layer 14 from being formed at the ends of the sheet material 12s. The end of the sheet material 12s is a portion sealed when the relevant sheet material 12s is formed as the outer packaging 12. The reason for this is because a sealing degree of the outer packaging is lost and a vacuum degree of the vacuum heat insulation panel 10 cannot be maintained if the resin fiber 13 exits at this portion. The sheet material 12s includes a metal layer having electrical conductivity, and thus, is susceptible to an action of the electrical field. Therefore, the resin fiber layer 14 can be efficiently formed on the surface of the sheet material 12s.

In this case, the resin fiber layer 14 is formed with respect to each of two sheet materials 12s. Then, these sheet materials 12s are overlapped each other in a manner that their resin fiber layer 14 sides face each other. Then, the ends of the sheet materials 12s are welded. This forms the sheet materials 12s into a bag-like shape. Note that a part of the sheet materials 12s is remained open at this time. The reason why is because an inside of the sheet materials 12s formed into a bag-like shape is depressurized from this open part. Then, the inside of the sheet materials 12s formed into a bag-like shape is depressurized, and then, the open part of the ends is welded. This allows the all ends of the sheet materials 12s to be welded to obtain the vacuum heat insulation panel 10 the inside of which is vacuumized.

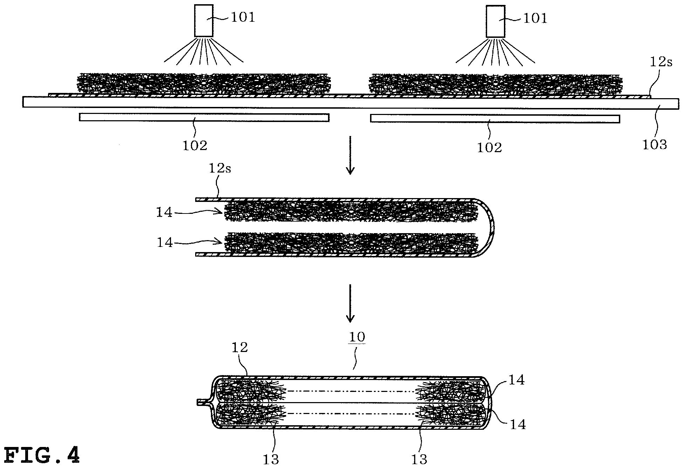

Note that the manufacturing method of the vacuum heat insulation panel 10 is not limited to that described above. For example, in a manufacturing method shown in Figure 4, first, the resin fiber layers 14 are formed at two locations on one sheet of long sheet material 12s at a predetermined distance. A part interposed between by two resin fiber layers 14 is a portion constituting one end of the vacuum heat insulation panel 10. Then, the sheet material 12s is folded in a manner that the resin fiber layers 14 face each other. Subsequently, the ends of the sheet material 12s are welded to form a bag-like shape. Note that in this case also, a part of the sheet material 12s is remained open. Then, the inside of the sheet materials 12s formed into a bag-like shape is depressurized, and then, the open end is welded. According to this manufacturing method, it is possible to increase airtightness of at least one end of the vacuum heat insulation panel 10, that is, the end formed by a part at a center of the sheet material 12s interposed between two resin fiber layers 14. Therefore, the vacuum heat insulation panel 10 having the further higher vacuum degree can be manufactured.

In the vacuum heat insulation panel 10 according to the embodiment, the resin fiber layer 14 formed of the resin fibers 13 is formed into a film directly on an area on the sheet material 12s corresponding to the inner surface of the outer packaging 12. Then, the sheet material 12s is formed into the bag-like shaped outer packaging 12 to configure the vacuum heat insulation panel 10. According to this configuration, the work of laminating the numerous non-woven fabrics or the work of containing the core material having the numerous non-woven fabrics laminated in the outer packaging 12 can be eliminated, which enables the vacuum heat insulation panel 10 to be manufactured more easily.

Note that the resin fiber 13 may be made by a melt-spinning method, for example. The melt-spinning method is a manufacturing method in which raw materials for the resin fiber 13 are heated and melted, and then, extruded from a nozzle into an air or water to be cooled, obtaining the resin fiber 13.

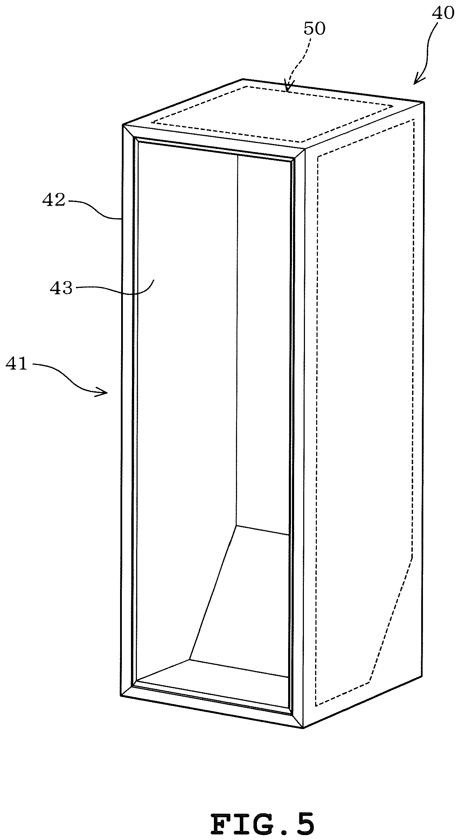

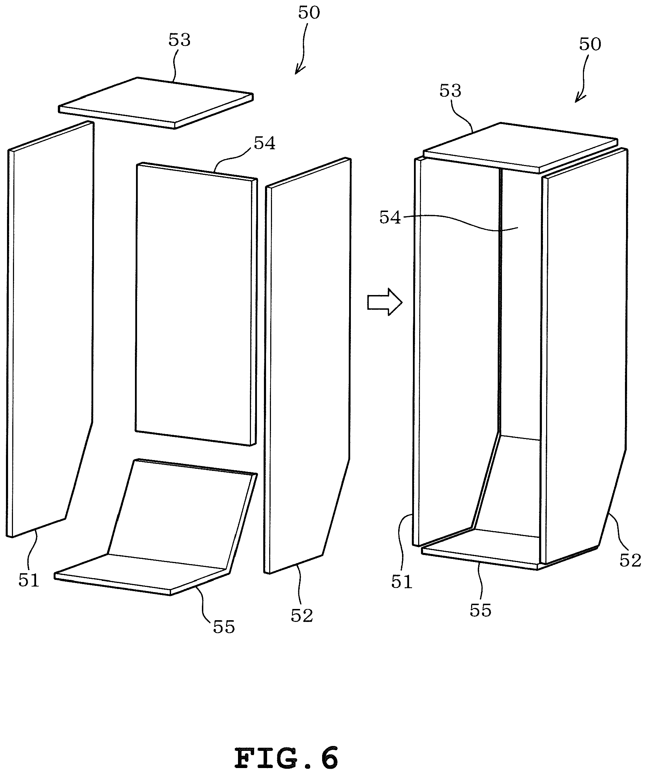

Next, a description is given of a refrigerator using the above vacuum heat insulation panel 10 on the basis of on Figure 5 and Figure 6.

A refrigerator 40 includes a heat insulation box 41 a front face of which is open as shown in Figure 5. The refrigerator 40 has a refrigeration cycle not shown attached to the heat insulation box 41. The refrigerator 40 also includes dividers not shown dividing the heat insulation box 41 into a plurality of storage chambers, a heat insulation door not shown covering a front face of the storage chamber, a drawer not shown moving back and forth in the storage chamber, and the like. The heat insulation box 41 of the refrigerator 40 has an outer box 42, an inner box 43, and a vacuum heat insulation panel assembly 50 interposed between these outer box 42 and inner box 43. The outer box 42 is formed of a steel plate, and the inner box 43 is made from synthetic resin.

The vacuum heat insulation panel assembly 50 is divided corresponding to wall parts of the heat insulation box 41 of the refrigerator 40. Concretely, the vacuum heat insulation panel assembly 50 is divided into a left wall panel 51, a right wall panel 52, a ceiling panel 53, a rear wall panel 54, and a bottom wall panel 55 as shown in Figure 6. Any of these left wall panel 51, right wall panel 52, ceiling panel 53, rear wall panel 54, and bottom wall panel 55 is formed of the above vacuum heat insulation panel 10. The left wall panel 51, the right wall panel 52, the ceiling panel 53, the rear wall panel 54, and the bottom wall panel 55 are assembled as the vacuum heat insulation panel assembly 50, and incorporated between the outer box 42 and the inner box 43. Gaps among the left wall panel 51, the right wall panel 52, the ceiling panel 53, the rear wall panel 54, and the bottom wall panel 55 constituting the vacuum heat insulation panel assembly 50 between the outer box 42 and the inner box 43 are sealed by heat insulating sealing members not shown. The sealing member is made from foamable resin or the like, for example.

In this way, the refrigerator 40 has the vacuum heat insulation panel assembly 50 constituting the heat insulation box 41. The vacuum heat insulation panel assembly 50 is formed of the above vacuum heat insulation panel 10. Therefore, the higher heat insulation performance can be ensured while further reducing the thickness and the weight.

The vacuum heat insulation panel according to the embodiment is a vacuum heat insulation panel containing the core material formed of the resin fibers in the outer packaging, in which the resin fibers are formed into a film directly on the inner surface of the outer packaging. The manufacturing method of a vacuum heat insulation panel according to the embodiment is a manufacturing method of a vacuum heat insulation panel containing the core material formed of resin fibers in the outer packaging, the method including a step of forming the resin fiber layer formed of the resin fibers into a film on the sheet material forming the outer packaging, and a step of forming the outer packaging from the sheet material on which the resin fiber layer is formed into a film. According to the embodiment, the work of laminating the numerous non-woven fabrics or the work of putting the core material having the numerous non-woven fabrics laminated into the outer packaging can be eliminated, which enables the vacuum heat insulation panel to be manufactured more easily.

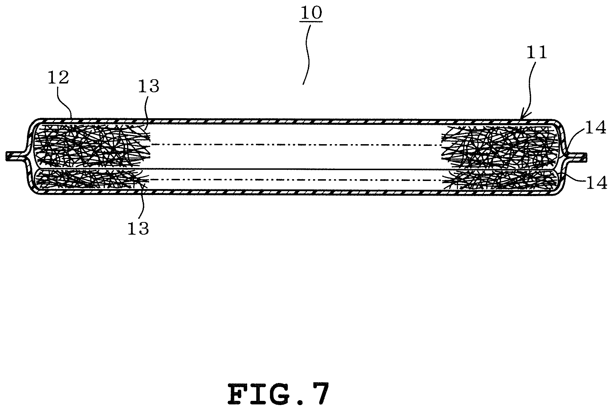

Note that the vacuum heat insulation panel 10 may have the different thicknesses of the resin fiber layers 14 facing each other in the outer packaging 12 as show in Figure 7. The thickness of the resin fiber layer 14 can be adjusted, when the resin fiber layer 14 is formed into a film on the sheet material 12s, for example, by adjusting a spray amount or a spray duration of the resin solution sprayed from the nozzle 101, or adjusting intensity of the electric field formed between the nozzle 101 and the return electrode 102.

### (Second Embodiment)

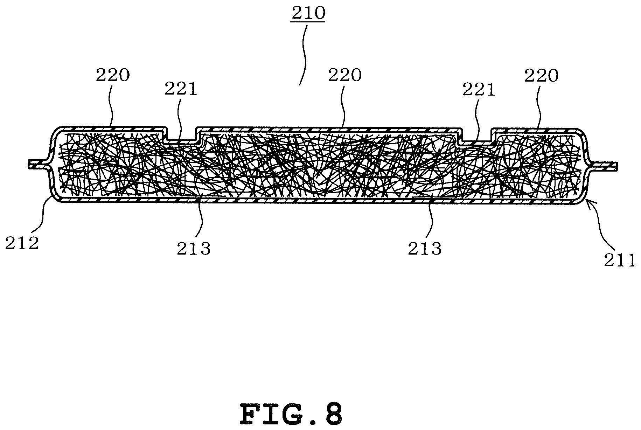

A vacuum heat insulation panel 210 illustrated in Figure 8 includes a core material 211 constituting a main portion thereof within an outer packaging 212. The core material 211 is constituted by a resin fiber 213. The outer packaging 212 constitutes a surface part of the vacuum heat insulation panel 210. The outer packaging 212, which is a so-called laminate material made by depositing metal or metal oxide on one layer or two or more layers of resin film, has low gas permeability and high airtightness, for example. The outer packaging 212 having the core material 211 thereinside is depressurized until its inside pressure becomes almost vacuum, and then sealed. This forms the outer packaging 212 having the core material 211 thereinside as the vacuum heat insulation panel 210 an inside of which is depressurized. Then, on a surface of the core material 211, in other words, a surface of the vacuum heat insulation panel 210, a convex portion 220 and a concave portion 221 are provided.

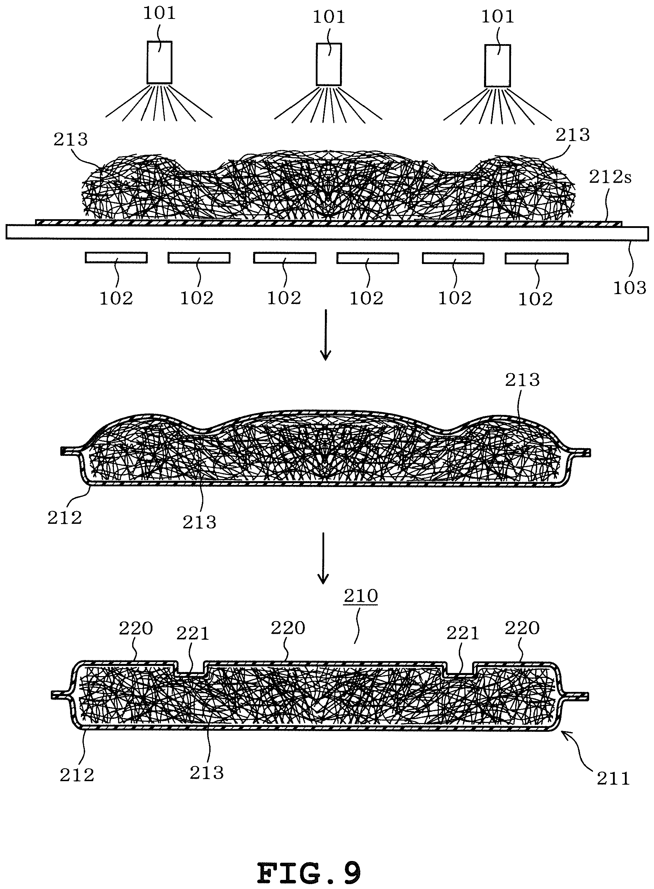

Next, a description is given of a manufacturing method of the above vacuum heat insulation panel 210. As shown in Figure 9, a manufacturing apparatus of the vacuum heat insulation panel 210 includes a plurality of nozzles 101 and a plurality of return electrodes 102. The nozzle 101 and the return electrode 102 are opposite to each other. A high voltage of several kV or more is applied between the nozzle 101 and the return electrode 102, for example. In other words, an electric field is formed between the nozzle 101 and the return electrode 102 by the applied voltage. The manufacturing apparatus includes a pedestal unit 103 between the nozzles 101 and the return electrodes 102. On the pedestal unit 103, a sheet material 212s constituting the outer packaging 212 is placed. A plurality of nozzles 101 are arranged above the pedestal unit 103 in a matrix. Each nozzle 101 is swingably configured to be able to adjust an ejecting direction of the resin solution. A plurality of return electrodes 102 are arranged below the pedestal unit 103 in a matrix or in a manner that a plurality of long return electrodes 102 are arranged in parallel. A resin as the material of the resin fiber 213 is dissolved in a solvent compatible to the resin to be supplied to the nozzles 101. The pedestal unit 103 may be configured by a conveyance belt. The configuration of the manufacturing apparatus is not limited to this configuration, and various configurations may be adopted.

In a core material forming step shown in Figure 9 on the uppermost part, the manufacturing apparatus adjusts the ejection mode of the resin solution from the nozzle 101 to form the convex portion 220 and the concave portion 221 on the surface of the core material 211. In this case, the manufacturing apparatus is configured to adjust, as the ejection mode of the resin solution from the nozzle 101, any one of an ejection amount of the resin solution, an ejection angle of the resin solution, and the intensity of the electrical field acting on resin solution. The adjustment of the ejection amount of the resin solution can be made by adjusting a pressure applied to the resin solution in ejecting the relevant resin solution from the nozzle 101, for example. In other words, the ejection amount of the resin solution from the nozzle 101 corresponding to a region where the convex portion is desired to be formed is increased, and the ejection amount of the resin solution from the nozzle 101 corresponding to a region where the concave portion desired to be formed is decreased, forming a desired concavo-convex shape on the surface of the core material 211.

The adjustment of the ejection angle of the resin solution can be made by swinging each nozzle 101 to adjust an angle of each nozzle 101, for example. In other words, the nozzles 101 are swung toward a region where the convex portion is desired to be formed to decrease or not use the nozzles 101 toward a region where the concave portion is desired to be formed, forming a desired concavo-convex shape on the surface of the core material 211. The adjustment of the intensity of the electrical field acting on the resin solution can be made by adjusting the voltage applied between each nozzle 101 and each return electrode 102. In other words, the voltage applied between the nozzle 101 and the return electrode 102 corresponding to a region where the convex portion is desired to be formed is increased, and the voltage applied between the nozzle 101 and the return electrode 102 corresponding to a region where the concave portion is desired to be formed is decreased, forming a desired concavo-convex shape on the surface of the core material 211. Note that the manufacturing apparatus can form the concavo-convex shape with high accuracy by adequately combining the adjustment of the ejection amount of the resin solution, the adjustment of the ejection angle of the resin solution, and the adjustment of the electrical field.

In a vacuumizing step shown in Figure 9 on the middle part, the core material 211 on which the concavo-convex shape is formed in the core material forming step is put into the bag-like shaped outer packaging 212. Then, the inside of the outer packaging 212 containing the core material 211 therein is depressurized and sealed. This allows the vacuum heat insulation panel 210 the inside of which is depressurized to be obtained. Note that it is difficult to form the convex portion and the concave portion which are clearly distinguished from each other on the surface of the core material 211 only by the core material forming step shown in Figure 9 on the uppermost part. In other words, in the core material forming step, a clump of the resin fibers 213 is formed such that an amount of the resin fibers 213 relatively increases at a region where the convex portion is desired to be formed, and the amount of the resin fibers 213 relatively decreases at a region where the concave portion is desired to be formed. Then, the clump of the resin fibers 213 is put into the outer packaging 212 and the inside of the outer packaging is depressurized such that the convex portion 220 and the concave portion 221 clearly distinguished from each other appear on the surface of the core material 211, and thus, on the surface of the vacuum heat insulation panel 210. That is, a region where the amount of the resin fibers 213 relatively increases forms the convex portion 220 in vacuumizing, and a region where the amount of the resin fibers 213 relatively decreases forms the concave portion 221 in vacuumizing.

In the manufacturing method of the vacuum heat insulation panel 210 according to the embodiment, in the core material forming step of ejecting the resin solution dissolving the resin as the raw material for the resin fiber 213 from the nozzle 101 of the manufacturing apparatus to form the core material 211, the ejection mode of the resin solution is adjusted to form the convex portion 220 and the concave portion 221 on the surface of the core material 211. According to the manufacturing method, even in a case where the core material 211 is formed of the resin fibers 213, a desired concavo-convex shape can be formed on the surface of the core material 211.

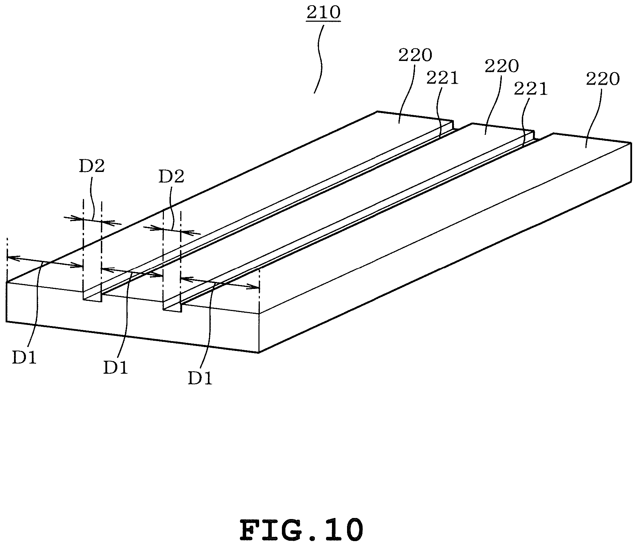

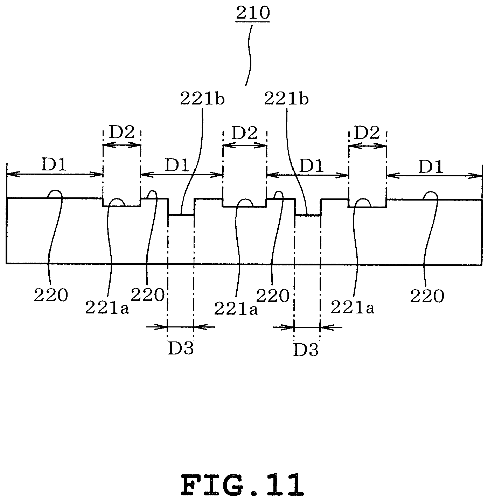

Next, a description is given of an exemplary configuration of the vacuum heat insulation panel 210 manufactured according to the above described manufacturing method. The vacuum heat insulation panel 210 illustrated in Figure 10 has the convex portion 220 and the concave portion 221 linearly formed thereon along a longitudinal direction or transverse direction of the relevant vacuum heat insulation panel 14. A width D2 of the concave portion 221 is made narrower than a width D1 of the convex portion 220. The vacuum heat insulation panel 210 illustrated in Figure 11 has a first concave portion 221a and second concave portion 221b as the concave portion 221. The first concave portion 221a corresponds to the concave portion 221 in the vacuum heat insulation panel 210 illustrated in Figure 10. The second concave portion 221b is additionally provided to the convex portion 220. In other words, the vacuum heat insulation panel 210 illustrated in Figure 11 corresponds to the vacuum heat insulation panel 210 illustrated in Figure 10 on which the second concave portion 221b is added to the convex portion 220. These first concave portion 221a and second concave portion 221b are different in their width D2 and width D3. In this case, the width D3 of the second concave portion 221b is narrower than the width D2 of the first concave portion 221a. A depth of the second concave portion 221b is deeper than a depth of the first concave portion 221a. Note that these first concave portion 221a and second concave portion 221b are also formed along the longitudinal direction or transverse direction of the vacuum heat insulation panel 210. The vacuum heat insulation panel 210 illustrated in Figure 10 and Figure 11 is provided in the refrigerator in a manner described later in detail.

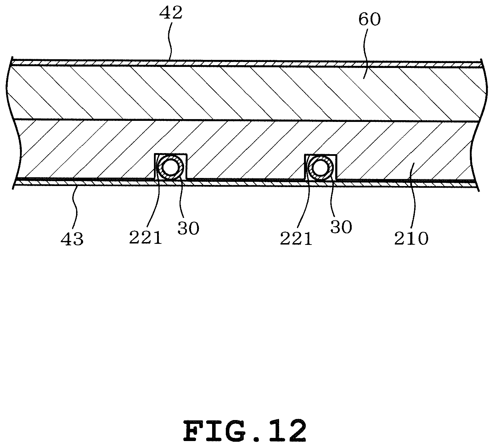

Figure 12 shows a state where the vacuum heat insulation panel 210 illustrated in Figure 10 is incorporated between the outer box 42 and the inner box 43. In other words, a heat radiating pipe 30 is provided in the concave portion 221 of the vacuum heat insulation panel 210. The heat radiating pipe 30 configures a part of the refrigeration cycle included by the refrigerator, and radiates a heat by a coolant of high temperature and pressure ejected from a compressor flowing therein. The heat radiated from the heat radiating pipe 30 is used to able to avoid troubles such as dew condensation. Note that, in this case, a foam heat insulation material 60 made from urethane or the like is provided between the vacuum heat insulation panel 210 and the inner box 43. However, the foam heat insulation material 60 may not be provided in the configuration.

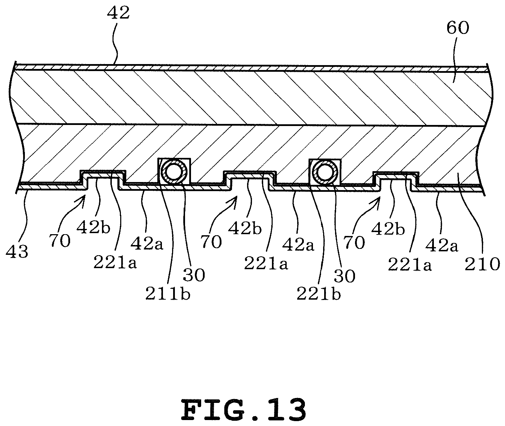

Figure 13 shows a state where the vacuum heat insulation panel 210 illustrated in Figure 11 is incorporated between the outer box 42 and the inner box 43. That is, in this case, the heat radiating pipe 30 is provided to the second concave portion 221b having a narrower width and a deeper depth, of a plurality of the concave portions formed on the vacuum heat insulation panel 210. In the embodiment, the heat radiating pipe 30 is provided to the second concave portion 221b having the narrowest width and the deepest depth, of a plurality of the concave portions formed on the vacuum heat insulation panel 210. In this case, the outer box 42 has a bead part 70 for improving the strength of the relevant outer box 42. This makes the outer box 42 also have a convex portion 42a and a concave portion 42b.

The convex portion 220 of the vacuum heat insulation panel 210 faces the convex portion 42a of the outer box 42. The concave portion 221 of the vacuum heat insulation panel 210 faces the concave portion 42b of the outer box 42. According to this configuration, improvement in the strength of the outer box 42 can be attained by the bead part 70. The convex portions interfitting each other and the concave portions interfitting each other make it possible to accurately position the vacuum heat insulation panel 210 with respect to the outer box 42. Tightness of contact between the surface of the vacuum heat insulation panel 210 and the inner surface of the outer box 42 is improved, attaining improvement in the heat insulation performance. Note that, in this case also, the foam heat insulation material 60 may not be provided in the configuration.

The manufacturing method of a vacuum heat insulation panel according to the embodiment is a manufacturing method of a vacuum heat insulation panel including the core material formed of resin fibers, the method including the core material forming step of ejecting the resin solution dissolving resin as the raw material for the resin fiber from the nozzle to form the core material. In the core material forming step, the ejection mode of the resin solution is adjusted to form the convex portion and the concave portion on the surface of the core material. According to the manufacturing method, even in a case where the core material is formed of the resin fibers, a desired concavo-convex shape can be formed on the surface of the core material.

Note that the core material 211 may be configured to have a plurality of non-woven fabric-like fiber layers laminated which are formed of the resin fibers 213. In this case, the core material 211 may have several hundreds to several thousands or more of fiber layers laminated.

### (Third Embodiment)

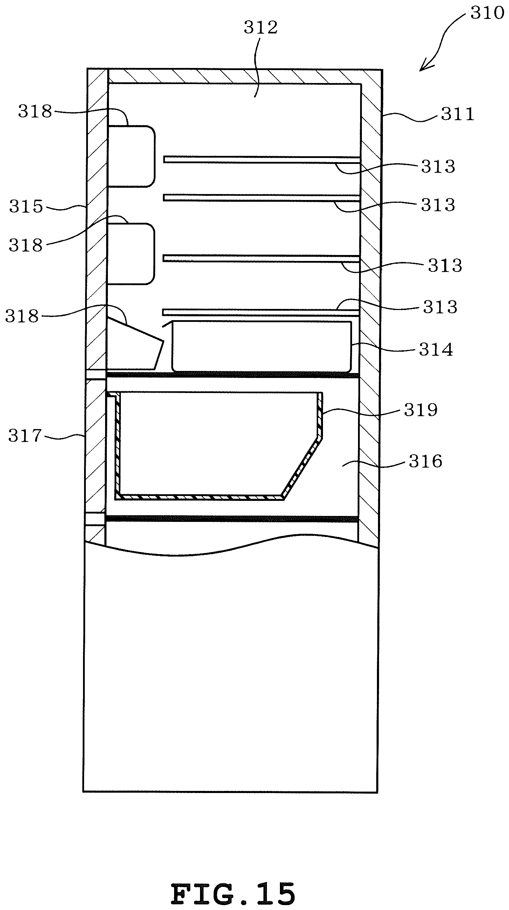

A description is given of a refrigerator 310 according to the embodiment on the basis of Figure 15. The refrigerator 310 includes a heat insulation box 311 a front face of which is open as shown in Figure 15. The refrigerator 310 has a refrigeration cycle not shown attached to the heat insulation box 311. The refrigerator 310 also includes dividers 313 dividing an inside of a storage chamber 312 formed by the heat insulation box 311, a case 314, a heat insulation door 315 covering a front face of the storage chamber 312, and the like. The refrigerator 310 includes a drawer door 317 moving back and forth in the storage chamber 316 formed by heat insulation box 311.

The refrigerator 310 includes door shelf pocket members 318 inside the heat insulation door 315, that is, on the storage chamber 312 side. The refrigerator 310 includes also a storage case 319 inside the drawer door 317. These divider 313, case 314, door shelf pocket member 318 and storage case 319 correspond to component members provided inside the heat insulation box 311. Note that any of the divider 313, the case 314, the door shelf pocket member 318 and the storage case 319 is an example of the component member. Therefore, the component member is not limited to these illustrated divider 313, case 314, door shelf pocket member 318, storage case 319 and the like.

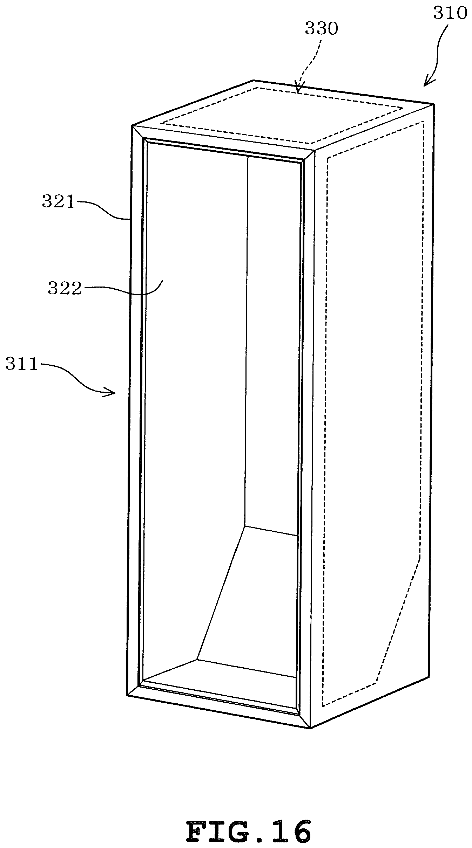

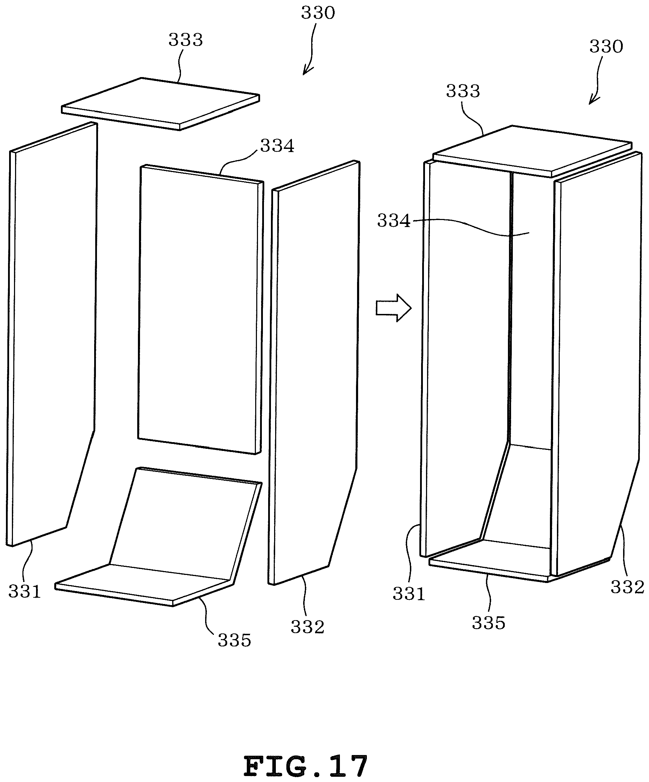

The heat insulation box 311 of the refrigerator 310 has an outer box 321, an inner box 322, and a vacuum heat insulation panel assembly 330 interposed between these outer box 321 and inner box 322 as shown in Figure 16. The outer box 321 is formed of a steel plate, and the inner box 322 is made from synthetic resin. The vacuum heat insulation panel assembly 330 is divided corresponding to wall parts of the heat insulation box 311 of the refrigerator 310. Concretely, the vacuum heat insulation panel assembly 330 is divided into a left wall panel 331, a right wall panel 332, a ceiling panel 333, a rear wall panel 334, and a bottom wall panel 335 as shown in Figure 17. Any of these left wall panel 331, right wall panel 332, ceiling panel 333, rear wall panel 334, and bottom wall panel 335 is formed of the above vacuum heat insulation panel described above. The left wall panel 331, the right wall panel 332, the ceiling panel 333, the rear wall panel 334, and the bottom wall panel 335 are assembled as the vacuum heat insulation panel assembly 330, and incorporated between the outer box 321 and the inner box 322. Gaps among the left wall panel 331, the right wall panel 332, the ceiling panel 333, the rear wall panel 334, and the bottom wall panel 335 constituting the vacuum heat insulation panel assembly 330 between the outer box 321 and the inner box 322 are sealed by heat insulating sealing members not shown. The sealing member is made from foamable resin or the like, for example.

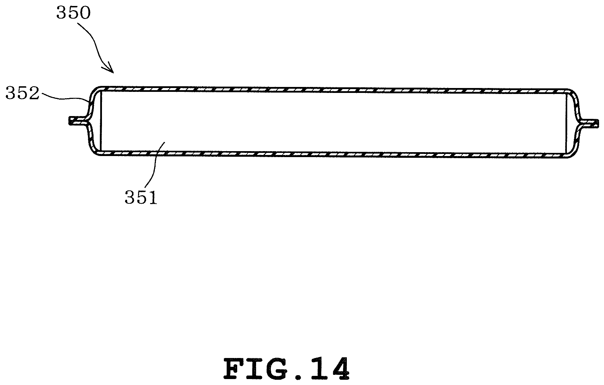

Next, a description is given in detail of the vacuum heat insulation panels constituting the vacuum heat insulation panel assembly 330 on the basis of Figure 14. In Figure 14, a vacuum heat insulation panel 350 is described. The vacuum heat insulation panel 350 forms each of the left wall panel 331, the right wall panel 332, the ceiling panel 333, the rear wall panel 334, and the bottom wall panel 335 constituting the vacuum heat insulation panel assembly 330.

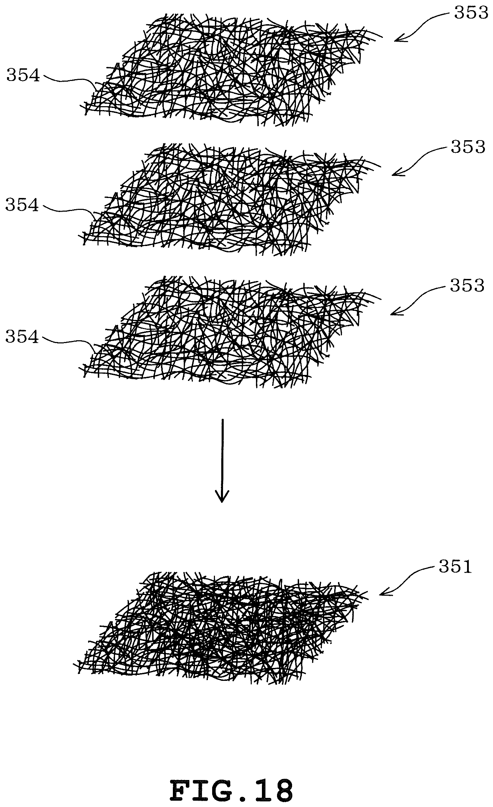

The vacuum heat insulation panel 350 includes a core material 351 and an outer packaging 352. The core material 351 has a plurality of laminated layers of non-woven fabric 353 as shown in Figure 18. The non-woven fabric 353 is formed of resin fibers 354 tangling with each other at random. The resin fiber 354 is made by the electrospinning method. The resin fiber 354 made by the electrospinning method is a long fiber whose outer diameter d falls within a range of d < 1 µm and whose length is more than 1000 times the outer diameter d. The resin fiber 354 has a shape generally not linear but curbed at random in a crimped fashion. For this reason, the resin fibers 354 are likely to tangle each other to be easily formed into a plurality of layers. By utilizing the electrospinning method, spinning of the resin fiber 354 and forming of the non-woven fabric 353 can be carried out at the same time. As a result, the core material 351 can be formed in shorter man-hours.

The resin fiber 354 forming the non-woven fabric 353 is ensured to have an ultrafine outer diameter from nanometers to micrometers by utilizing the electrospinning method. Therefore, a thickness per one sheet of the non-woven fabric 353 is very thin, and a thickness of the core material 351 having those laminated is also thin. In a case of the glass fiber of related art, the fiber length is shorter and the fibers are less likely to tangle each other.

In this way, in the case of the embodiment, the core material 351 is formed of the non-woven fabrics 353 having a plurality of layers laminated. The core material 351 has several hundreds to several thousands or more of laminated layers of the non-woven fabric 353, for example. The resin fiber 354 forming the non-woven fabric 353 according to the embodiment is formed to have a substantially uniform circular or ellipsoidal section.

The resin fiber 354 forming the non-woven fabric 353 is made from an organic polymer having a density, that is, a specific gravity, smaller than glass. In other words, the resin fiber 354 is made from synthetic resin. Any resin such as polystyrene or polyamide-imide may be used for the resin fiber 354 so long as it is dissolvable in the solvent and spinnable. Making the resin fiber 354 of the polymer having the density smaller than glass can attain weight reduction of the resin fiber 354. The non-woven fabric 353 may be formed by mixing two or more kinds of the resin fibers 354 different in the synthetic resin as their raw materials. In the non-woven fabric 353, when a volume of airspaces formed among the resin fibers 354 tangling each other decreases, the number of the airspaces contrarily increases. The more the number of the airspaces formed among the resin fibers 354, the more it contributes to the improvement of the heat insulation property. Therefore, in the non-woven fabric 353, the outer diameter d of each fiber of the resin fibers 354 forming the fabric 353 is preferably reduced to the order of nanometers in a range of d < 1 µm. The diameter reduction of the outer diameter d of the resin fiber 354 in this way decreases the volume of and increases the number of the airspaces formed among the resin fibers 354. Such diameter reduction more decreases the volume of and more increases the number of the airspaces formed among the resin fibers 354 tangling each other, which attains improvement in the heat insulation property of the non-woven fabric 353. To the resin fiber 354, various inorganic fillers may be added such as silicon oxide, metal hydroxide, carbonate, hydrosulfate, and silicate, for example.

As shown in Figure 14, the outer packaging 352 contains the core material 351 formed of the non-woven fabric 353. The outer packaging 352 is an airtight sheet which has no gas permeability because of made by depositing metal, metal oxide or the like on one layer or two or more layers of resin film, for example. The outer packaging 352 containing the core material 351 is sealed after its inside is depressurized together with the core material 351 until the inside pressure becomes almost vacuum. This forms the core material 351 and the outer packaging 352 containing the material 351 as the vacuum heat insulation panel 350. In this case, the vacuum heat insulation panel 350 may contain a frame member as a frame inside the outer packaging 352 in order to reduce crumpling of the formed vacuum heat insulation panel 350.

Next, a description is given of a manufacturing apparatus and manufacturing method for forming the non-woven fabric 353 constituting the above core material 351.

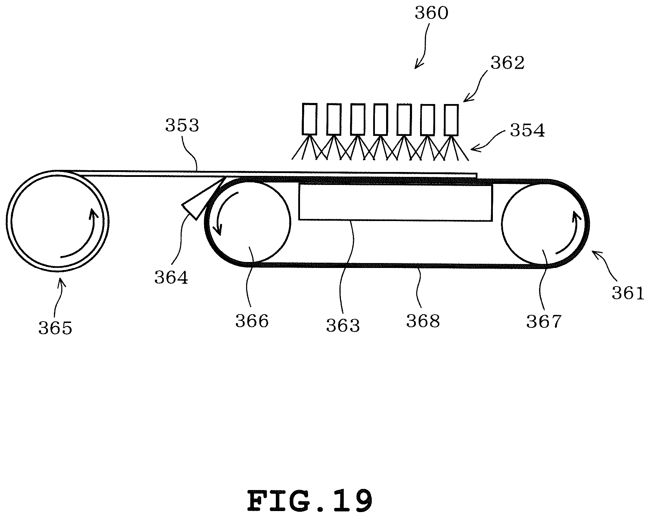

Figure 19 is a schematic view showing an example of a manufacturing apparatus 360. The manufacturing apparatus 360 includes a transport unit 361, a nozzle unit 362, a return electrode 363, a separating unit 364, and a reel unit 365. The transport unit 361 has a pair of roller 366 and a roller 367. A revolving belt 368 is provided between the roller 366 and a roller 367. At least one of the pair of the roller 366 and the roller 367 is rotatably driven by a drive unit not shown. This allows the belt 368 wound around the roller 366 and the roller 367 to revolve by a rotation of the roller 366 or the roller 367.

The nozzle unit 362 is provided above the transport unit 361. A plurality of the nozzle units 362 are arranged along a travelling direction of the belt 368. A plurality of the nozzle units 362 are also arranged in a direction perpendicular to the travelling direction of the belt 368, that is, a depth direction in Figure 19. In this way, a plurality of nozzle units 362 are arranged in a matrix above the transport unit 361. The return electrode 363 is provided to be opposite to the nozzle units 362. The belt 368 is interposed between the nozzle units 362 and the return electrode 363. A high voltage of several kV or more is applied between the nozzle units 362 and the return electrode 363. In other words, an electric field is formed between the nozzle units 362 and the return electrode 363 by the applied voltage.

The separating unit 364 is provided on the downstream side in the travelling direction of the belt 368. The separating unit 364 separates the non-woven fabric 353 formed on the belt 368 on the nozzle unit 362 side from the belt 368. The reel unit 365 is provided to be adjacent to the separating unit 364. The reel unit 365 reels in the non-woven fabric 353 separated by the separating unit 364 from the belt 368.

The raw material resin for the resin fiber 354 forming the non-woven fabric 353 is supplied in a state of being dissolved in the solvent to the nozzle units 362. In other words, the raw material resin for the resin fiber 354 is supplied as a solution to the nozzle units 362. The resin solution supplied to the nozzle units 362 is spayed at a high pressure from the nozzle units 362 toward the belt 368. At this time, as described above, the electric field is formed between the nozzle units 362 and the return electrode 363 by the high voltage. The resin solution sprayed from the nozzle units 362 is made to be fine by applying the high voltage, and is attracted from the nozzle units 362 toward the return electrode 363 at random while fluctuating by means of an electrostatic action because of being electrically charged. The solvent in the resin solution sprayed at the high voltage vaporizes once the solution is sprayed from the nozzle 362. Therefore, the resin solution sprayed from the nozzle unit 362, the solution in which is vaporized until the solution reaches the return electrode 363, becomes fine fiber-like and adheres to the belt 368 in a random shape. As a result, on a surface of the belt 368 on the nozzle unit 362 side, the non-woven fabric 353 is formed in which fine fibers tangling each other. At this time, the non-woven fabric 353 is in a state where the resin fibers 354 sprayed from a plurality of the nozzle units 362 tangle each other in several layers.

At this time also, the resin fibers 354 are splayed from the nozzle units 362 at random and in disorder, that is, sprayed in an irregular state. Therefore, the resin fiber 354, from when sprayed from the nozzle unit 362 until reaching the belt 368 on the return electrode 363 side, irregularly rolls to be formed to have a shape generally not straight but in a randomly crimped fashion. As a result, the resin fibers 354 reaching the belt 368 on the return electrode 363 tangle each other irregularly and strongly to form the non-woven fabric 353. The resin fiber 354 may have a spiral form appearance when sprayed from nozzle unit 362 in some cases. The resin fiber 354 having the spiral form appearance strongly tangles with other resin fibers 354 to contribute to the improvement in the strength of the non-woven fabric 353. Further, the resin fibers 354 are continuously sprayed from the nozzle unit 362. For this reason, the formed resin fibers 354 are formed into substantially continuous one fiber until completion of spraying from the nozzle 362. As a result, the resin fiber 354 becomes a very elongated long fiber having a fiber length of 1000 or more times the outer diameter d of the fiber. For comparison, the glass fiber made by the flame method of related art, for example, has a fiber length of about 200 µm with an outer diameter of 3 to 4 µm. In the case of the glass fiber having a short fiber length relative to an outer diameter of a fiber, the short fibers tangle with each other where the formed non-woven fabric has a floc-like appearance and is likely to separately ravel, a stable shape of which is difficult to keep. On the other hand, if the resin fiber 354 is made by the electrospinning method as in the embodiment, the fiber has a sufficient continuous length without being broken. Therefore, the resin fiber 354 made by the electrospinning method tangles not only with other fibers but also with itself because of its length and an irregular shape due to rolling when formed. As a result, the resin fiber 354 made by the electrospinning method forms the non-woven fabric 353 also by one fiber strongly tangling with itself. By doing so, the resin fiber 354 according to the embodiment forms the non-woven fabric 353 having the more stable shape as compared to the glass fiber. The non-woven fabric 353 having the stable shape also gives an advantage of ease of lamination of the non-woven fabrics 353 in forming the core material 351.

The formed non-woven fabric 353 moves leftward in Figure 19 along the belt 368 moving, and is separated by the separating unit 364 from the belt 368. The non-woven fabric 353, while being sprayed with the raw materials resin from the nozzle units 362, is formed into a continuous sheet-like shape. Therefore, the non-woven fabric 353 separated from the belt 368 is reeled by the reel unit 365 in a state of the sheet-like shape. The reeled non-woven fabric 353 is cut into a piece having an appropriate size, and then, 100 or more sheets of the fabric 353 are laminated to be formed into the core material 351, for example.

In the case of the manufacturing apparatus 360 shown in Figure 19, the outer diameter d or length of the resin fiber 354 forming the non-woven fabric 353 changes depending on a concentration of the resin solution supplied to the nozzle unit 362, a spray pressure, the voltage applied between the nozzle units 362 and the return electrode 363, a distance between the nozzle unit 362 and the return electrode 363, a travelling speed of the belt 368 and the like. These concentration of the supplied resin solution, spray pressure, voltage applied, distance between nozzle unit 362 and the return electrode 363, travelling speed of the belt 368 and the like may be arbitrarily adjusted depending on the desired outer diameter d or length of the resin fiber 354.

Next, a description is given of a recycling method of the refrigerator 310 according to the above embodiment.

The refrigerator 310 includes the component members such as the divider 313, the case 314, the door shelf pocket member 318, and the storage case 319 as described above. Any of these component members including the divider 313, the case 314, the door shelf pocket member 318 and the storage case 319 is configured to use the same synthetic resin as the resin fiber 354 constituting the core material 351 of the vacuum heat insulation panel 350. In other words, the synthetic resin forming the divider 313, the case 314, door shelf pocket member 318 and the storage case 319 and the resin fiber 354 forming the non-woven fabric 353 constituting the core material 351 are the same synthetic resin. For example, if polystyrene is used as the materials for the resin fiber 354, the component members such as the divider 313, the case 314, the door shelf pocket member 318, and the storage case 319 are also made from polystyrene.

The component members constituting the refrigerator 310 and the resin fiber 354 forming the non-woven fabric 353 are made from the same synthetic resin in this way so that the collected component members such as the divider 313, the case 314, the door shelf pocket member 318 and the storage case 319 are reused as the core material 351 of the vacuum heat insulation panel 350. Concretely, the component members such as the divider 313, the case 314, the door shelf pocket member 318, and the storage case 319 yield a product incapable of being used for the refrigerator 310 due to damage or non-conformance with a standard, for example, on quality inspection. These non-standard component members such as the divider 313, the case 314, the door shelf pocket member 318, and the storage case 319 are dissolved in the solvent after crushed, for example, to be made into the raw materials for the resin fiber 354 to form the non-woven fabric 353.

In the case of the vacuum heat insulation panel 350, the core material 351 is separated from the outer packaging 352, the resin fiber 354 forming the non-woven fabric 353 constituting the separated core material 351 is dissolved again in the solvent to be used for the raw materials for the resin fiber 354 forming the non-woven fabric 353. The non-woven fabric 353 constituting the core material 351 separated from the outer packaging 352 of the vacuum heat insulation panel 350 corresponds to a separated non-woven fabric in the claims. As described above, the resin fiber 354 forming the non-woven fabric 353 constituting the vacuum heat insulation panel 350 according to the embodiment is a long fiber having a fiber length 1000 or times the outer diameter d. For this reason, the resin fibers 354 forming the non-woven fabric 353 strongly tangle with each other. This makes the non-woven fabric 353 according to the embodiment be unlikely to break apart and be easy to separate from the outer packaging 352. In other words, the non-woven fabric 353 according to the embodiment is unlikely to separately ravel also when separated from the outer packaging 352. In contrast to this, the glass fiber having the fiber length of only about several hundreds of µm is a short fiber and has a floc-like appearance, and therefore, is likely to scatter and difficult to separate from the outer packaging. In this way, the resin fiber 354 forming the non-woven fabric 353 according to the embodiment does not ravel in separating from the outer packaging 352 and is likely to keep a certain shape. As a result, the core material 351 constituted by the non-woven fabric 353 is easy to separate from the outer packaging 352 of the vacuum heat insulation panel 350. The separated non-woven fabric 353 is dissolved in the solvent, and thereafter, made into the raw materials for the resin fiber 354 to form again the non-woven fabric 353 similar to the component members such as the divider 313, the case 314, the door shelf pocket member 318, and the storage case 319. In this case, the collected component members such as the divider 313, the case 314, the door shelf pocket member 318, and the storage case 319 can be made into the raw materials for the recycled non-woven fabric 353 mixedly with the non-woven fabric 353 separated from the vacuum heat insulation panel 350.

In the case of the embodiment described above, in the vacuum heat insulation panel 350, the resin fiber 354 forming the non-woven fabric 353 constituting the core material 351 is the same synthetic resin as the component members of the refrigerator 310 such as the divider 313, the case 314, the door shelf pocket member 318, and the storage case 319. For this reason, the collected component members such as the divider 313, the case 314, the door shelf pocket member 318, and the storage case 319 and the non-woven fabric 353 constituting the core material 351 collected from the vacuum heat insulation panel 350 are recycled as the materials for the resin fiber 354 forming the non-woven fabric 353 constituting the core material 351 of the vacuum heat insulation panel 350. Therefore, it is possible to facilitate the recycling and reduce the environmental load.

In the embodiment, the resin fiber 354 is formed by the electrospinning method. The divider 313, the case 314, the door shelf pocket member 318, and the storage case 319, or the non-woven fabric 353 which are collected for recycling are dissolved in the solvent. Therefore, the resin fiber 354 is easily recycled as the non-woven fabric by the electrospinning method through an easy process of dissolving the collected component members or non-woven fabric 353 in the solvent. Therefore, it is possible to facilitate the recycling and reduce the environmental load.

Further, in the embodiment, by use of the electrospinning method, the resin fiber 354 is formed which has the outer diameter d thin as much as it falls within a range of d < 5 µm and the fiber length of 1000 or more times the outer diameter d. The resin fiber 354, which is made of the synthetic resin, is smaller in the specific gravity as compared with the glass fiber, attaining the weight reduction. The airspace between the resin fibers 354 is smaller and the number of the airspaces is increased by using the resin fiber 354 having the fine outer diameter d. Therefore, it is possible to maintain the heat insulation performance and reduce the thickness and the weight.

In the embodiment, the resin fiber 354 forming the non-woven fabric 353 constituting the core material 351 of the vacuum heat insulation panel 350 is a long fiber having a length 1000 or times the outer diameter d. This allows the non-woven fabric 353 to strongly tangle by means of the resin fibers 354 forming the fabric 353. Therefore, the non-woven fabric 353 is unlikely to ravel and is stable in its shape. As a result, the non-woven fabric 353 as the core material 351 of the vacuum heat insulation panel 350 is easily separated from the outer packaging 352. Therefore, the separation of the non-woven fabric 353 from the vacuum heat insulation panel 350 in recycling is facilitated, promoting the recycle.

### (Fourth Embodiment)

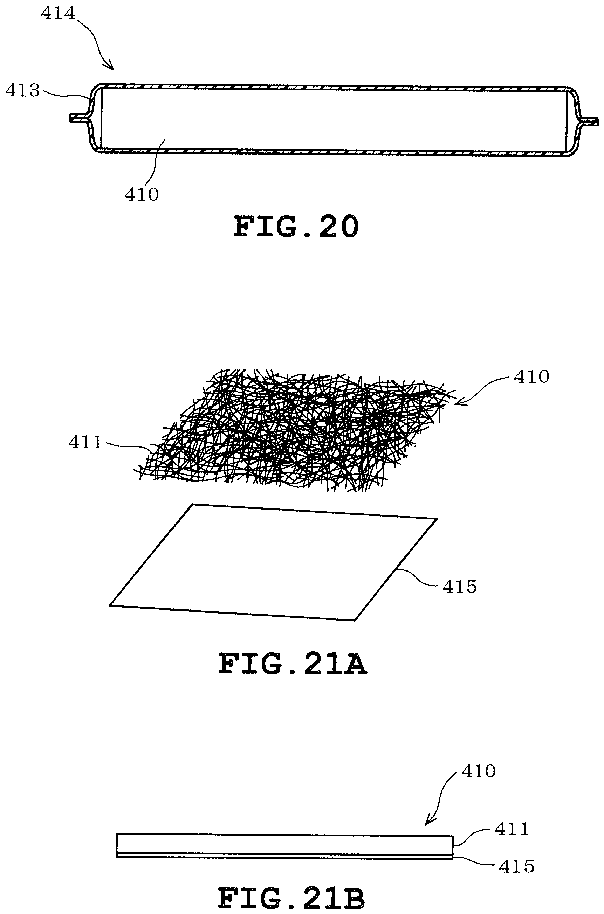

A vacuum heat insulation panel 414 illustrated in Figure 20 has a configuration in which a core material 410 constituted by a non-woven fabric 411 is contained in a bag-like shaped outer packaging 413. The outer packaging 413 containing the core material 410 is sealed after its inside is depressurized together with the core material 410 until the inside pressure becomes almost vacuum. This forms the outer packaging 413 containing the core material 410 as the vacuum heat insulation panel 414. In this case, the vacuum heat insulation panel 414 may contain a frame member as a frame inside the outer packaging 413 in order to reduce crumpling of the formed vacuum heat insulation panel 414.

The resin fiber forming the non-woven fabric 411 is ensured to have an ultrafine outer diameter from nanometers to micrometers by utilizing the electrospinning method. Therefore, a thickness per one sheet of the non-woven fabric 411 is very thin, and a thickness of the core material 410 is also thin. In a case of the glass fiber of related art, the fiber length is shorter and the fibers are less likely to tangle each other. For this reason, if the glass fiber is used, the shape of the non-woven fabric is difficult to maintain. In the case of the glass fiber also, spinning of the glass fiber and forming of the non-woven fabric are generally difficult to carry out at the same time. If the glass fiber of related art is used, the non-woven fabric is formed in a state where the glass fibers are dispersed in water in a manner of papermaking. If spinning of the glass fiber and forming of the non-woven fabric are carried out at the same time, a non-woven fabric which is large in a thickness and has a floc-like appearance is formed, and it is difficult to form a thin non-woven fabric which is small in a thickness.

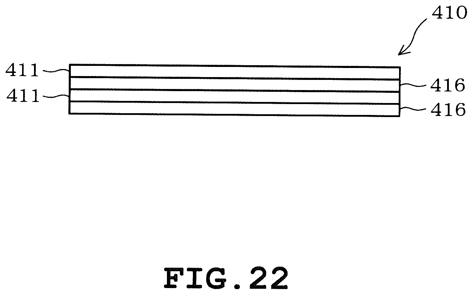

The core material 410 may include an aluminum foil 415 on one surface side of the lamination as shown in Figure 21A and Figure 21B. As described above, the core material 410 constituted by the non-woven fabric 411 is set to be contained in the outer packaging 413, and thereafter, is formed into the vacuum heat insulation panel 414 by depressurizing an inside of the outer packaging 413. For this reason, the vacuum heat insulation panel 414 may be possibly crumpled or deformed due to the inside of the outer packaging 413 being depressurized. The aluminum foil 415 being provided on one surface side of the non-woven fabric 411 improves the strength of the core material 410. This can reduce the crumpling or deformation due to the depressurization. The core material 410 may include a glass fiber layer 416 laminated together with the non-woven fabric 411 as shown in Figure 22. The glass fiber layer 416 is higher in the strength than the non-woven fabric 411 formed of fine resin fibers. Therefore, by laminating the non-woven fabric 411 and the glass fiber layer 416, the crumpling and deformation due to the depressurization can be reduced, although the thickness and the weight increase as compared with the case where only the non-woven fabric 411 constitutes the core material 410. Note that the number of layers of the glass fiber layer 416 is not limited to two as shown in Figure 22 but may be one, or three or more.

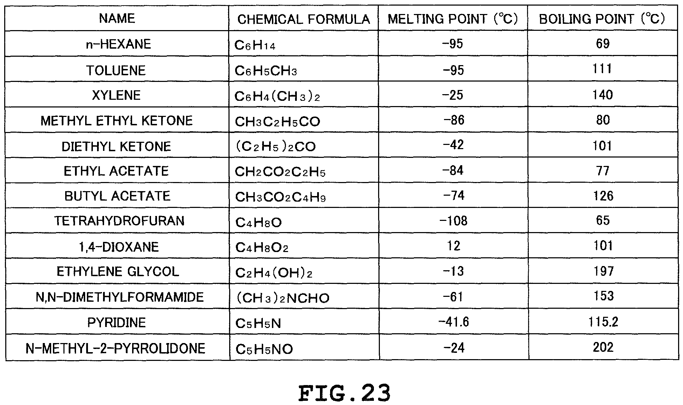

The solvent in which the resin is dissolved in forming the resin fiber may be those shown in Figure 23, for example. That is, the solvent which is compatible to the resin as the material for the resin fiber is used. The more a solubility parameter (SP) of the resin as the material approximates to an SP of the solvent, the higher the compatibility. In the electrospinning method, the solvent having higher compatibility is selected depending on the resin as the material for the resin fiber. For example, in a case where polystyrene is selected as the material for the resin fiber, the SP of polystyrene is 9.1. At this time, toluene having the SP of 9.1 is preferably selected as the solvent.

If the electrospinning method is used, a boiling point or dielectric constant of the solvent is an element for selection. The resin, after sprayed from the nozzle unit until reaching the return electrode, is formed to be fiber-like. For this reason, the solvent is required to not evaporate until the solution is sprayed from the nozzle unit but evaporate until reaching the return electrode. For example, if the boiling point of the solvent is too low, the solvent evaporates after sprayed from the nozzle unit before a high voltage is applied. Therefore, the resin fiber is spun before becoming sufficient thin, not obtaining the resin fiber having a desired outer diameter. If the boiling point of the solvent is too high, the solvent does not evaporate until reaching the return electrode, and remains in the resin fiber. If the solvent remains in the resin fiber in this way, after the vacuum heat insulation panel 414 is formed, vapor of the solvent is released from the resin fiber to decrease a vacuum degree of the vacuum heat insulation panel 414, leading to heat insulation property degradation. Additionally, if the solvent remains in the resin fiber, drying time is required, or the vapor of the solvent is released on depressurizing in forming the vacuum heat insulation panel 414 to elongate a time taken for obtaining a vacuum state, leading to productive efficiency degradation. Therefore, the boiling point of the solvent is required to be selected depending on characteristics of the manufacturing apparatus 20.

Similarly, the dielectric constant is also a key element for forming the resin fiber. In general, a substance having a large dielectric constant has a property liable to accumulate a charge. Therefore, the solvent liable to accumulate a charge and having a large dielectric constant accumulates the charge by means of the voltage applied to the nozzle unit to be liable to be attracted toward the return electrode by means of electrostatic action. As a result, if a solvent having a large dielectric constant is used, the outer diameter of the formed resin fiber is advantageously easy to decrease. As the resin solution made to be fine is sprayed from the nozzle unit while the high voltage is applied to the solution and the solvent evaporates, the resin fiber is trapped on the return electrode by means of the electrostatic action. Therefore, heightening the dielectric constant of the solvent allows the solution containing the resin sprayed from the nozzle unit to be attracted toward the return electrode by a strong force. As a result, the higher the dielectric constant of the solvent, the more a trapping efficiency of the formed resin fiber is improved. Note that the formed non-woven fabric 411 and core material 410 may be subjected to a drying step before subjected to the depressurization and vacuuming as the vacuum heat insulation panel. The formed non-woven fabric 411 or core material 410 may be dried using heating means, or dried by being left as it is for a predetermined time period, for example. This removes the solvent remaining in the non-woven fabric 411 or the core material 410 to be able to maintain the vacuum degree of the vacuum heat insulation panel for a long time.

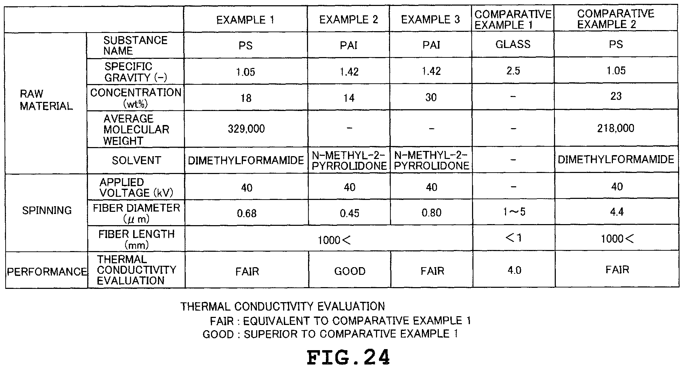

Next, a description is given of a performance comparison between the core material 410 using the resin fiber formed by the electrospinning method according to the embodiment and the core material using the glass fiber of related art on the basis of the Figure 24.

Example 1 to Example 3 used, as the non-woven fabric 411 constituting the core material 410, the resin fiber formed by the electrospinning method according to the embodiment. On the other hand, Comparative Example 1 used the glass fiber of related art for the core material. Comparative Example 2 used the resin fiber for the core material similar to Example 1 to Example 3. Example 1 and Comparative Example 2 used polystyrene (PS) as the raw material for the resin fiber. Example 2 and Example 3 used polyamide-imide (PAI) as the raw material for the resin fiber.

### [Resin fiber]

PS as the raw material for the resin fiber in Example 1 and Comparative Example 2 has a density, that is, a specific gravity, of 1.05 which is smaller than 2.5 that is of the glass fiber in Comparative Example 1. PAI as the raw material for the resin fiber in Example 2 and Example 3 has a specific gravity of 1.42 which is smaller than the glass fiber. By doing so, the vacuum heat insulation panel 414 having the core material 410 formed of the resin fiber in Example 1 to Example 3 can attain improvement in the weight reduction as compared to the vacuum heat insulation panel using the glass fiber of related art.

For PS as the raw material for the resin fiber in Example 1 and Comparative Example 2, dimethylformamide was used as the solvent. In the case of Example 1, PS as the raw material had an average molecular weight of 218,000, and was prepared as a solution having a concentration of 23 (wt %). In the case of Comparative Example 2, PS as the raw material had an average molecular weight of 329,000, and was prepared as a solution having a concentration of 18 (wt %). For PAI as the raw material for the resin fiber in Example 2 and Example 3, N-methyl-2-pyrrolidone was used as the solvent. In the case of Example 2, PAI as the raw material was prepared as a solution having a concentration of 14 (wt %). In the case of Example 3, PAI as the raw material was prepared as a solution having a concentration of 30 (wt %).

The resin fibers in Example 1 to Example 3 and Comparative Example 2 were spun by use of the electrospinning method. At this time, the voltage applied to the nozzle unit was set to 40 (kV) in any case. Fiber diameters of the obtained resin fibers, that is, the outer diameter d, were 0.68 (µm) in Example 1, 0.45 (µm) in Example 2, and 0.80 (µm) in Example 3. On the other hand, the outer diameter d of the glass fiber in Comparative Example 1 was 1 to 5 (µm). The outer diameter in Comparative Example 2 was 4.4 (µm). Each of the resin fibers in Example 1 to Example 3 and Comparative Example 2 was one continuous fiber until spinning of fibers formed by spraying from a plurality of the nozzle units was completed, that is, until forming of the non-woven fabric 411 was completed. Therefore, in the case of Example 1 to Example 3 and Comparative Example 2, the fiber length of each of the formed resin fibers had a sufficient length of 1000 or more times the outer diameter d. In contrast, the glass fiber in Comparative Example had the fiber length less than 1 (mm).

Evaluated were the heat insulation performances of the core materials 410 constituted by the non-woven fabrics 411 formed of the resin fibers spun by the electrospinning method in this way. The heat insulation performances were evaluated by comparing the core materials 410 using the resin fibers in Example 1 to Example 3 and Comparative Example 2 and the core material using the glass fiber of related art in Comparative Example 1. Any of the core materials 410 using the resin fibers in Example 1 to Example 3 and Comparative Example 2 and the core material using the glass fiber of related art was formed into the vacuum heat insulation panel 414 under the same condition. The heat insulation performances were compared using the formed vacuum heat insulation panels 414. The vacuum heat insulation panel 414 using the glass fiber of related art had a thermal conductivity of 4.0 (mW/mK). The vacuum heat insulation panel 414 using the glass fiber of related art was evaluated to be "Good: thermal conductivity is small", and "Fair: thermal conductivity is equivalent". As a result, Example 1 and Example 3 were evaluated to be "Fair", which was equivalent in the thermal conductivity to the glass fiber of related art. Comparative Example 2 was evaluated also to be "Fair". In contrast, Example 2 was evaluated to be "Good", and was higher in the heat insulation property as compared to the glass fiber of related art.

From these results of Example 1 to Example 3, it was found that, regardless of the resin as the raw material, the vacuum heat insulation panel 414 including the core material 410 constituted by the resin fiber having the outer diameter d falling within a range of d < 1 µm was improved in the heat insulation property more than the vacuum heat insulation panel 414 including the core material 410 constituted by the glass fiber of related art. In addition, Example 1 to Example 3 which are smaller in the specific gravity of the resin fiber than the glass fiber of related art can attain improvement in the weight reduction of the formed vacuum heat insulation panel 414.

Further, in comparing Example 2 and Example 3, Example 2 was evaluated to be higher in the thermal conductivity. This means that, in the case of the same raw material for the resin fiber, the smaller the outer diameter d, the more improved the thermal conductivity. Therefore, the outer diameter d of the resin fiber constituting the core material 410 can be made smaller by use of the electrospinning method, attaining improvement in the heat insulation property of the vacuum heat insulation panel 414.

Further, in the case of Example 1 to Example 3, the resin fiber was spun by the electrospinning method to form the non-woven fabric 411. This makes the resin fibers having a long fiber length strongly tangle with each other, stabilizing the shape of the formed non-woven fabric 411. Moreover, the non-woven fabric 411 formed of the resin fiber attains the weight reduction. The non-woven fabric 411 stable in its shape and reduced in its weight can be laminated in plural layers. As a result, the weight-reduced and sturdy core material 410 can be manufactured by use of the resin.

### (Other Embodiments)

The above plural embodiments may be combined and carried out.

The embodiments are shown as merely examples, and are not intended to limit the scope of the invention. These novel embodiments can be carried out in other various modes, and various omissions, replaces, and modifications may be made within a scope not departing from the gist of the invention. These embodiments and modifications thereof are encompassed within the scope and gist of the invention as well as within the scope of the invention described in the claims and its equivalent.

## Claims

1. A vacuum heat insulation panel containing a core material formed of resin fibers in an outer packaging, wherein
the resin fibers are formed into a film directly on an inner surface of the outer packaging.

2. A core material included in the vacuum heat insulation panel according to claim 1.

3. A refrigerator including the vacuum heat insulation panel according to claim 1.

4. A vacuum heat insulation panel used for a refrigerator including a heat insulation box having an inner box and an outer box and component members provided inside the heat insulation box, the vacuum heat insulation panel being interposed between the inner box and the outer box and performing heat insulation between the inner box and the outer box, comprising:
a core material having a plurality of laminated layers of non-woven fabric formed of resin fibers each of which is made of the same synthetic resin as the component members, and has an outer diameter d of the fiber falling within a range of d < 1 µm and a fiber length of 1000 or more times the outer diameter d; and
an outer packaging formed into a bag-like shape containing the core material with an inside thereof being depressurized.

5. A recycling method of a refrigerator provided with the vacuum heat insulation panel according to claim 4, comprising:
a step of forming the non-woven fabric from the component members collected.

6. A core material of a vacuum heat insulation panel, the core material having a plurality of laminated layers of a non-woven fabric, wherein
the non-woven fabric is formed of resin fibers each having an outer diameter d falling within a range of d < 1 µm.

7. A manufacturing method of a vacuum heat insulation panel including a core material formed of resin fibers, the method comprising:
a core material forming step of ejecting a resin solution dissolving resin as a raw material for the resin fiber from a nozzle to form the core material, wherein
in the core material forming step, an ejection mode of the resin solution is adjusted to form a convex portion and a concave portion on a surface of the core material.
